# EUROPEAN PATENT APPLICATION

(11) **EP 4 285 733 A1**
(43) Date of publication of application: **06.12.2023**
(21) Application number: 23176764.1
(22) Date of filing: 01.06.2023
(51) Int. Cl.: A23F 5/24, A23F 5/40, A61K 9/00, A23F 5/36, A23L 29/269, A23L 2/385, A23L 19/00

(54) **COMPOSITION FOR MAKING AN INSTANT BEVERAGE**

(30) Priority: 02.06.2022 BE 202205429
(71) Applicant: WE CARE Comm. V, 3061 Leefdaal (BE)
(72) Inventor: ROELANDT, Philippe, 2930 Brasschaat (BE); RIKKELMAN, Peter, 3061 Leefdaal (BE)
(74) Representative: Bureau M.F.J. Bockstael NV

(57) **Abstract**

Composition (1) for making an instant beverage, characterised in that the composition (1) is provided with 70-75% beverage mix (2) and 25-30% additive (3), said additive (3) containing 75-80% maltodextrine (4) and 10-150 xanthan gum (5) and 5-10% erythritol (6).

## Description

The present invention relates to a composition for making an instant beverage.

In particular, the invention is intended for making a beverage with a higher viscosity than that of water.

It is already known that swallowing drinks and food becomes more difficult as one gets older.

The cause for this is that the epiglottis does not close the trachea in time, namely at the moment when the food or drinks are at the level of the entrance to the oesophagus.

Chiefly liquids but also finely chewed food are moved to the oesophagus too fast for the consumer to respond, as it were, such that drinks and/or food can end up in the trachea. Consequently the elderly choke on it.

Also, remaining bits of food are no longer swallowed properly and automatically, such that the elderly are more likely to choke on them.

Moreover, people who suffered a stroke, have Parkinson's disease or dementia, for example, may also get so-called coordination problems when swallowing.

The coordination of the muscle groups involved in swallowing is disturbed. In addition, the sensation in the mouth may also be reduced, causing a person to choke.

People with a neurological disorder may thus possibly have swallowing problems.

Said swallowing problems reduce the quality of life of said people and the elderly.

They often dread meals, lose pleasure while eating and may socially isolate themselves out of shame.

Said swallowing problems may cause people and the elderly to eat and/or drink less such that they get undernourished and/or dehydrated and/or have problems taking medication.

Yet other disadvantages are the aspiration of food and/or drinks in the bronchi and/or bacterially infected saliva. Consequently, people and the elderly may suffer a chronic bronchial infection, aspiration pneumonia, which can be fatal for the patient.

Moreover, they have an increased risk of dying when choking, more specifically when they choke without supervision of third parties.

To lower the risk of choking, said people and the elderly are often given adapted food and beverages.

Typically, liquids with a low viscosity are avoided, particularly in the case of people and/or the elderly with severe swallowing problems.

A disadvantage of this is that water-based beverages such as coffee, tea, certain soups, soft beverages, etc. are very difficult to drink for the aforementioned people and the elderly with swallowing problems as said beverages are the fastest moving in the direction of the oesophagus and therefore are most likely to cause choking in people and/or the elderly.

That is why said (and very popular) beverages are usually discouraged and even avoided.

The purpose of the present invention is to provide a solution to at least one of the aforementioned and other disadvantages.

To this end the invention aims at a composition for making an instant beverage with a higher viscosity than that of water.

Said composition contains 70-75% beverage mix and 25-30% additive.

Said additive contains a thickening agent that increases the viscosity of the liquid, in this case water, in which the composition is dissolved.

An advantage of this is that people and/or the elderly with swallowing problems can still drink the beverage and will not choke or will choke less often.

Thus the additive contains 75-80% maltodextrine and 10-15% xanthan gum and 5-10% erythritol.

Xanthan gum is used here as the thickening agent to thicken the water in which it is dissolved to a solution with a higher viscosity than that of the water in which the xanthan gum was dissolved.

The maltodextrine in the composition is also used as thickening agent.

Erythritol functions substantially as a stabiliser in the composition. Consequently the solution in which the erythritol is dissolved will be a homogeneous solution with one and the same viscosity and thus without the formation of lumps.

An additional advantage of erythritol is that it is a natural sweetener, such that no extra sugar needs to be added to the composition and/or coffee.

Yet another additional advantage is that erythritol has a glycemic index of 0 and thus has no influence on the blood sugar level of the consumer. Consequently, the composition is also very suitable for diabetics.

This is particularly also the case for elderly people, who often also suffer Type 2 diabetes.

In a special aspect of the invention, the composition is such that the maltodextrine and the xanthan gum and the erythritol react when making the instant beverage whereby a homogeneous beverage is obtained with a desired viscosity that is higher than that of water.

In a preferred embodiment, the specific weight of the additive deviates maximum 15%, more preferably maximum 100 and most preferably maximum5% from the specific weight of the beverage mix.

In the most preferred embodiment, the specific weight of the additive is equal to the specific weight of the beverage mix.

An advantage of this is that the specific quantities of the additive are chosen such that when mixing the additive and the beverage mix a composition will form, the composition of which remains uniform and is such that the desired thickness (referred to as IDDSI) is obtained.

It is known that when mixing different ingredients with a different specific weight, over time the heavier ingredients will sink to the bottom and separate from lighter ingredients. For example, this is known in the case of liquids (oil and water), but such effect also applies to powders.

By choosing the quantities of the ingredients of the additive in the established ranges as defined according to the invention, it is ensured that the specific weight of the additive only deviates to a limited extent or not at all from the specific weight of the instant beverage.

As a result of this, after mixing the additive with the instant beverage, the composition of the mixture will remain uniform. Also when the packaging in which the composition is packaged is shaken during transport or during use.

Because it is ensured that the mixture always has a uniform composition, the user will also always obtain a uniform instant beverage with the desired viscosity.

With the intention of better showing the characteristics of the invention, a preferred embodiment of a composition according to the invention is described hereinafter, by way of an example without any limiting nature, with reference to the accompanying drawings wherein:

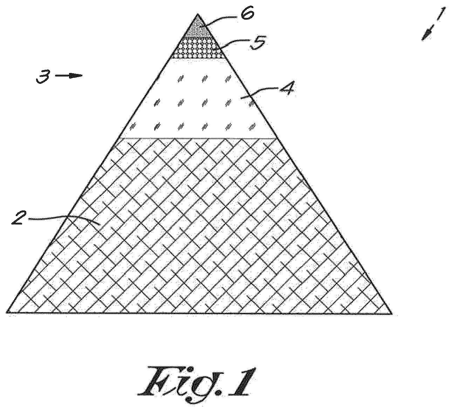

figure 1 schematically shows a composition according to the invention.

The composition 1 according to the invention is intended for making instant coffee with a higher viscosity than that of water.

Although in what follows instant coffee made with a coffee mix will always be referred to, the invention more generally relates to an instant beverage made with a beverage mix, which is understood to mean: instant coffee mix, instant decaffeinated coffee mix, instant tea mix, instant soup mix, instant soft drink mix, instant cola mix. This list is not exhaustive. Other beverage mixes also fall under the scope of protection of the invention. The soft drink mix can also have different flavours, such as orange, apple, red fruit, black fruit, neutral taste, citrus, etc.

Said composition 1 contains at least 70-75% coffee mix 2 and at least 25-30% additive 3.

Said additive 3 contains thickening agent that increases the viscosity of the liquid in which the composition 1 is dissolved.

Thus, the additive 2 contains 75-80% maltodextrine 4 and 5-15% xanthan gum 5 and 5-10% erythritol 6.

Preferably, the composition 1 is provided with 73% coffee mix 2.

In a preferred embodiment, the composition 1 is provided with 27% additive 3.

In addition, the invention also relates to the instant beverage, such as instant coffee made with the composition 1, whereby the instant beverage comprises between 2.5 and 10 grammes of composition per 100 millilitre water, and even more preferably comprises between 3.5 and 8.5 grammes of composition per 100 millilitre water.

In a first embodiment, the instant beverage may, for example, contain 3.5 grammes of composition per 100 millilitres of water. An IDDSI 2 ("International Dysphagia Diet Standardisation Initiative") can thus be obtained.

In an alternative embodiment, the instant beverage can contain 5.5 grammes of composition per 100 millilitres of water for example. An IDDSI 3 can thus be obtained.

In yet another alternative embodiment the instant beverage contains 8.5 grammes of composition per 100 millilitres of water, for example. An IDDSI 4 can thus be obtained.

In each of these embodiments the instant beverage contains a different viscosity.

The viscosity can thus be chosen and/or adapted to the needs of the people and/or the elderly.

In this way the viscosity of the instant beverage may vary from runny to syrupy to scoopable.

Runny is understood to mean a liquid that slowly runs off a slantedly held spoon.

Syrupy is understood to mean a liquid that does not retain its form in a spoon, but is too thick to drink with a straw.

Scoopable is understood to mean a viscosity whereby the instant coffee can be scooped and consumed by means of a small spoon.

Scoopable is also understood to mean a thick liquid which retains its scooped form in a spoon and is thus too thick to drink from a cup.

This is particularly suitable for consumers with relatively severe swallowing problems and who choke when consuming liquids with a viscosity like that of water and/or aqueous solutions.

The present invention is by no means limited to the embodiment described as an example and shown in the figures, however, such composition can be realised according to different variants, without departing from the scope of the invention.

## Claims

1. Composition (1) for making an instant beverage, **characterised in that** the composition (1) is provided with 70-75% beverage mix (2) and 25-30% additive (3), said additive (3) containing 75-80% maltodextrine (4) and 10-15% xanthan gum (5) and 5-10% erythritol (6).

2. Composition according to claim 1, **characterised in that** the composition is provided with 73% beverage mix (2).

3. Composition according to any one of the previous claims, **characterised in that** the composition contains 27% additive (3).

4. Composition according to any one of the previous claims, **characterised in that** the specific weight of the additive (3) deviates maximum 15%, more preferably maximum 10%, most preferably maximum 5% from the specific weight of the beverage mix (2).

5. Composition according to claim 4, **characterised in that** the specific weight of the additive (3) is equal to the specific weight of the beverage mix (2).

6. Composition according to any one of the previous claims, **characterised in that** the beverage mix (2) comprises one of the following instant beverages: instant coffee mix, instant decaffeinated coffee mix, instant tea mix, instant soup mix, instant soft drink mix, instant cola mix.

7. Instant beverage made with the composition (1) according to any one of the previous claims, whereby the instant beverage comprises between 2.5 and 10 grammes of composition (1) per 100 millilitres of water, and even more preferably between 3.5 and 8.5 grammes of composition (1) per 100 millilitres of water.
